# EUROPEAN PATENT APPLICATION

(11) **EP 4 782 975 A1**
(43) Date of publication of application: **29.07.2026**
(21) Application number: 24945395.2
(22) Date of filing: 20.12.2024
(51) Int. Cl.: G06F 3/0481

(54) **INTERACTION CONTROL DISPLAY METHOD AND APPARATUS, AND ELECTRONIC DEVICE AND STORAGE MEDIUM**

(30) Priority: 20.06.2024 CN 202410808560
(71) Applicant: HUAWEI TECHNOLOGIES CO., LTD., Shenzhen 518129 (CN)
(72) Inventor: XU, Jie, Shenzhen, Guangdong 518129 (CN); WANG, Dongdong, Shenzhen, Guangdong 518129 (CN); TANG, Chen, Shenzhen, Guangdong 518129 (CN); YANG, Zhiyan, Shenzhen, Guangdong 518129 (CN)
(74) Representative: Isarpatent
(86) International application number: PCT/CN2024/140967
(87) International publication number: WO 2025/260671

(57) **Abstract**

This application is applicable to the field of device control technologies, and provides an interaction control display method and apparatus, an electronic device, and a storage medium. The method includes: receiving a first operation on any display object in a first interface, where the first interface is an interface corresponding to a first application running in a foreground; performing the first operation, and generating, by using a second application, at least one interaction control corresponding to the display object; and displaying the at least one interaction control on a second interface, where the second interface is an interface that is the same as or different from the first interface. Interaction controls in embodiments of this application are not fixed, and an interaction control that matches a display object operated by a user may be generated based on the display object operated by the user, so that a personalized interaction control can be generated based on the operated display object. This improves interaction operation efficiency, and can also shorten an interaction path and reduce operation difficulty.

## Description

This application claims priority to Chinese Patent Application No. 202410808560.3, filed with the China National Intellectual Property Administration on June 20, 2024 and entitled "INTERACTION CONTROL DISPLAY METHOD AND APPARATUS, ELECTRONIC DEVICE, AND STORAGE MEDIUM", which is incorporated herein by reference in its entirety.

### TECHNICAL FIELD

This application relates to the field of device control technologies, and in particular, to an interaction control display method and apparatus, an electronic device, and a storage medium.

### BACKGROUND

To meet diversified use requirements of users, different types of applications may be installed on electronic devices. A user may start a corresponding application to implement a corresponding service by using an interaction control configured in the application, for example, perform online chat with another user in a chat application and perform route navigation in a map application.

However, in an existing interaction technology, a quantity and functions of interaction controls configured in an interface of each application are fixed, and service controls that match different operation objects of a user cannot be generated based on the different operation objects of the user. The user needs to switch to a specified interface to implement a corresponding service. Consequently, operation difficulty of the user is increased, an interaction path required for implementing the specified service is prolonged, and operation efficiency of the user is reduced.

### SUMMARY

Embodiments of this application provide an interaction control display method and apparatus, an electronic device, and a storage medium, to resolve a problem in an existing interaction technology that service controls that match different operation objects of a user cannot be generated based on the different operation objects of the user, and the user needs to switch to a specified interface to implement a corresponding service, resulting in high interaction operation difficulty and a long interaction path.

According to a first aspect, an embodiment of this application provides an interaction control display method, including:
receiving a first operation on any display object in a first interface, where the first interface is an interface corresponding to a first application running in a foreground;
performing the first operation, and generating, by using a second application, at least one interaction control corresponding to the display object; and
displaying the at least one interaction control on a second interface, where the second interface is an interface that is the same as or different from the first interface.

The second application may be an intelligent assistant (for example, a voice assistant) or another type of artificial intelligence AI application.

Implementation of this embodiment of this application has the following beneficial effects: When receiving the first operation initiated by the user on the display object in the first interface, an electronic device can perform the first operation on the display object and can also generate, by using the second application, the interaction control corresponding to the display object, and display the generated interaction control on a corresponding interface, to achieve the objective of automatically matching an associated interaction control based on the display object. Compared with an existing interaction technology, interaction controls in this embodiment of this application are not fixed, and an interaction control that matches a display object operated by a user may be generated based on the display object operated by the user, so that a personalized interaction control can be generated based on the operated display object. This improves interaction operation efficiency, and can also shorten an interaction path and reduce operation difficulty.

In a possible implementation of the first aspect, performing the first operation, and generating, by using the second application, the at least one interaction control corresponding to the display object include:
generating, based on a content feature corresponding to the display object, the at least one interaction control corresponding to the content feature.

In a possible implementation of the first aspect, generating, based on the content feature corresponding to the display object, the at least one interaction control corresponding to the content feature includes:
generating the at least one interaction control based on an operation type of the first operation and the content feature.

In a possible implementation of the first aspect, generating, based on the content feature corresponding to the display object, the at least one interaction control corresponding to the content feature includes:
generating, by using a feature recognition algorithm corresponding to a data type of the display object, the content feature corresponding to the display object.

In a possible implementation of the first aspect, the second interface is an interface corresponding to the second application.

In a possible implementation of the first aspect, after displaying the at least one interaction control on the second interface, the method further includes:
displaying, in response to a second operation on the interaction control, an interaction result generated based on the display object.

In a possible implementation of the first aspect, displaying, in response to the second operation on the interaction control, the interaction result generated based on the display object includes:
starting a third application in response to the second operation on the interaction control; and
displaying the interaction result on a third interface corresponding to the third application.

In a possible implementation of the first aspect, displaying, in response to the second operation on the interaction control, the interaction result generated based on the display object includes:
displaying the interaction result on the second interface in response to the second operation on the interaction control, where the second interface is the interface corresponding to the second application.

According to a second aspect, an interaction control display apparatus is provided, including:
a first operation receiving unit, configured to receive a first operation on any display object in a first interface, where the first interface is an interface corresponding to a first application running in a foreground;
a control generation unit, configured to: perform the first operation, and generate, by using a second application, at least one interaction control corresponding to the display object; and
a control display unit, configured to display the at least one interaction control on a second interface, where the second interface is an interface that is the same as or different from the first interface.

In a possible implementation of the second aspect, the control generation unit is specifically configured to generate, based on a content feature corresponding to the display object, the at least one interaction control corresponding to the content feature.

In a possible implementation of the second aspect, the control generation unit is specifically configured to generate the at least one interaction control based on an operation type of the first operation and the content feature.

In a possible implementation of the second aspect, the interaction control display unit is specifically configured to generate, by using a feature recognition algorithm corresponding to a data type of the display object, the content feature corresponding to the display object.

In a possible implementation of the second aspect, the second interface is an interface corresponding to the second application.

In a possible implementation of the second aspect, the display apparatus further includes:
an interaction response unit, configured to display, in response to a second operation on the interaction control, an interaction result generated based on the display object.

In a possible implementation of the second aspect, the interaction response unit includes: a third application starting unit, configured to start a third application in response to the second operation on the interaction control; and
a third interface display unit, configured to display the interaction result on a third interface corresponding to the third application.

In a possible implementation of the second aspect, the interaction response unit is specifically configured to display the interaction result on the second interface in response to the second operation on the interaction control, where the second interface is the interface corresponding to the second application.

According to a third aspect, an embodiment of this application provides an electronic device, including a memory, a processor, and a program stored in the memory. When the processor executes the program, the steps of the display method according to any one of the foregoing other aspects are implemented.

According to a fourth aspect, an embodiment of this application provides a readable storage medium. The readable storage medium stores a program, and when the program is executed by a processor, the steps of the display method according to any one of the foregoing other aspects are implemented.

According to a fifth aspect, an embodiment of this application provides a program product. When the program product is run on a device, the device is enabled to perform the steps of the display method according to any one of the foregoing other aspects.

According to a sixth aspect, an embodiment of this application provides a display method, applied to an electronic device, where the electronic device includes an intelligent assistant program. The method includes:
displaying a first interface of a first application, where a display object is displayed on the first interface, and the first application and the intelligent assistant program are different programs;
displaying, by the electronic device by using the intelligent assistant program in response to an operation of the user on the display object, at least one interaction control associated with the display object; and
performing, in response to an operation of the user on the at least one interaction control, a function corresponding to the at least one interaction control.

In a possible implementation of the sixth aspect, displaying, by the electronic device by using the intelligent assistant program in response to the operation of the user on the display object, the at least one interaction control associated with the display object includes:
generating, based on a content feature corresponding to the display object, the at least one interaction control corresponding to the content feature.

In a possible implementation of the sixth aspect, displaying, by the electronic device by using the intelligent assistant program in response to the operation of the user on the display object, the at least one interaction control associated with the display object includes:
generating the at least one interaction control based on an operation type of the first operation and the content feature.

In a possible implementation of the sixth aspect, generating, based on the content feature corresponding to the display object, the at least one interaction control corresponding to the content feature includes:
generating, by using a feature recognition algorithm corresponding to a data type of the display object, the content feature corresponding to the display object.

In a possible implementation of the sixth aspect, performing, in response to the operation of the user on the at least one interaction control, the function corresponding to the at least one interaction control includes:
starting a third application in response to a second operation on the interaction control; and
displaying an interaction result on a third interface corresponding to the third application.

In a possible implementation of the sixth aspect, performing, in response to the operation of the user on the at least one interaction control, the function corresponding to the at least one interaction control includes:
displaying the interaction result on a second interface in response to the second operation on the interaction control, where the second interface is an interface corresponding to the intelligent assistant program.

For other implementations, refer to the foregoing aspects. Details are not described again.

For beneficial effects of the foregoing aspects, refer to each other. Details are not described herein again.

### BRIEF DESCRIPTION OF DRAWINGS

FIG. 1(a), FIG. 1(b), and FIG. 1(c) are diagrams of a use operation of a user in an existing scenario;
FIG. 2 is a schematic flowchart of an interaction control display method according to an embodiment of this application;
FIG. 3(a), FIG. 3(b), FIG. 3(c), and FIG. 3(d) are diagrams of a first interface according to an embodiment of this application;
FIG. 4 is a diagram of collecting an operation logic chain according to an embodiment of this application;
FIG. 5A, FIG. 5B, and FIG. 5C are a diagram of generating an interaction control based on display content according to an embodiment of this application;
FIG. 6A, FIG. 6B, and FIG. 6C are a diagram of generating an interaction control based on display content according to another embodiment of this application;
FIG. 7(a), FIG. 7(b), and FIG. 7(c) are diagrams of display of an interaction control according to an embodiment of this application;
FIG. 8(a), FIG. 8(b), and FIG. 8(c) are diagrams of display of an interaction control according to another embodiment of this application;
FIG. 9(a), FIG. 9(b), and FIG. 9(c) are diagrams of display of an interaction control according to still another embodiment of this application;

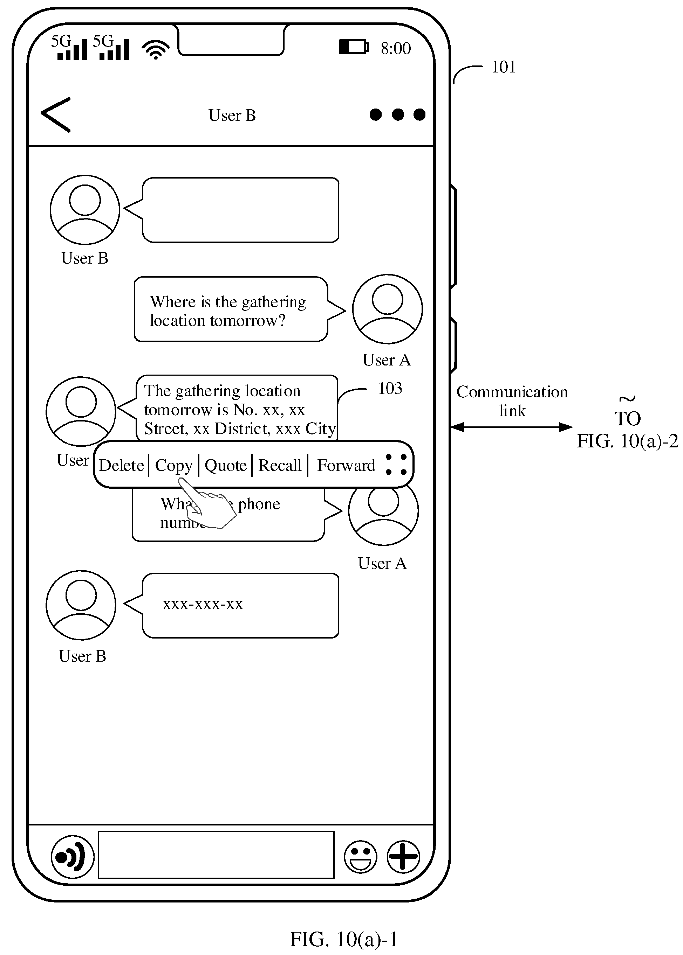

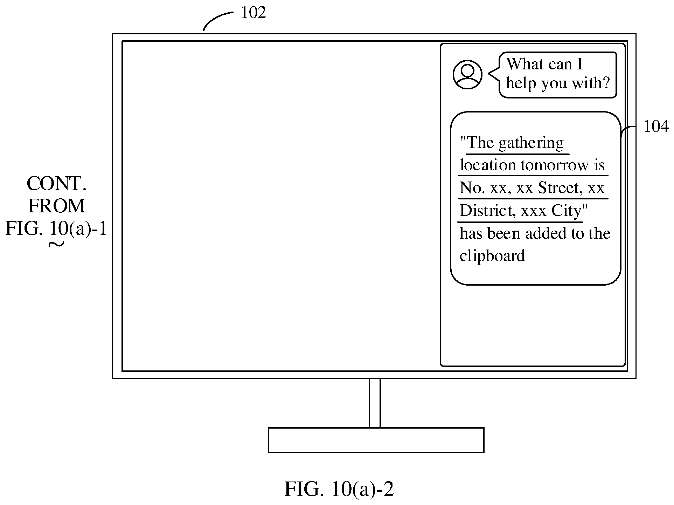

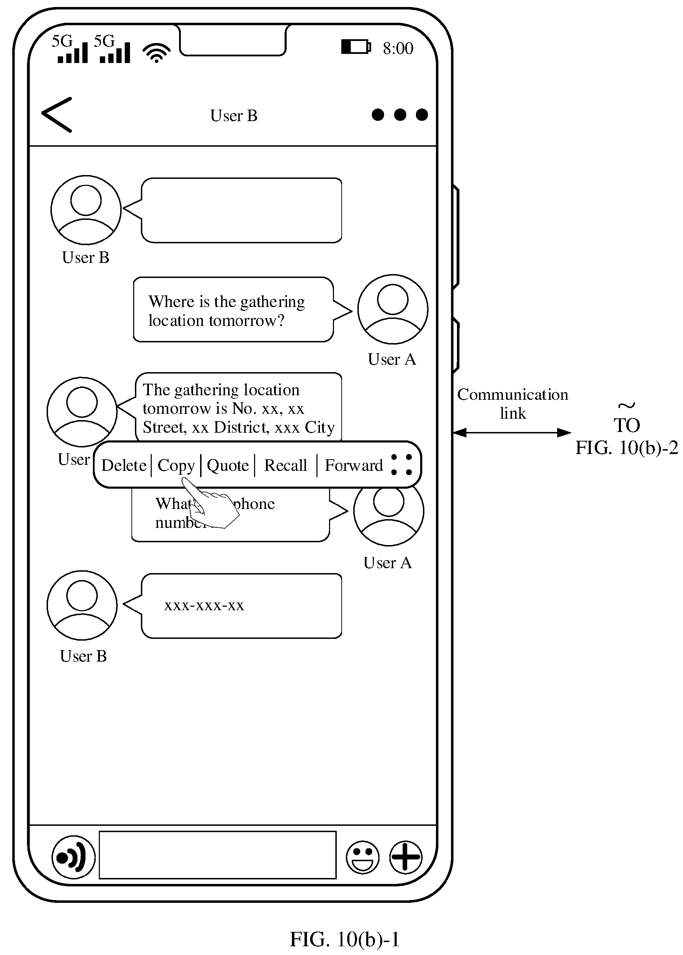

FIG. 10(a)-1, FIG. 10(a)-2, FIG. 10(b)-1, and FIG. 10(b)-2 are diagrams of display of an interaction control according to yet another embodiment of this application;

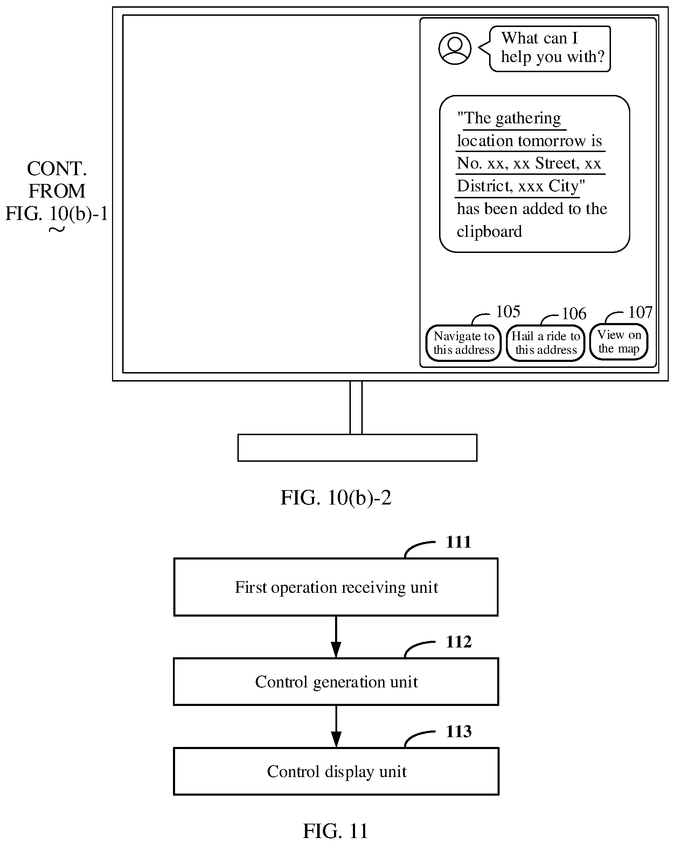

FIG. 11 is a block diagram of a structure of an interaction control display apparatus according to an embodiment of this application;

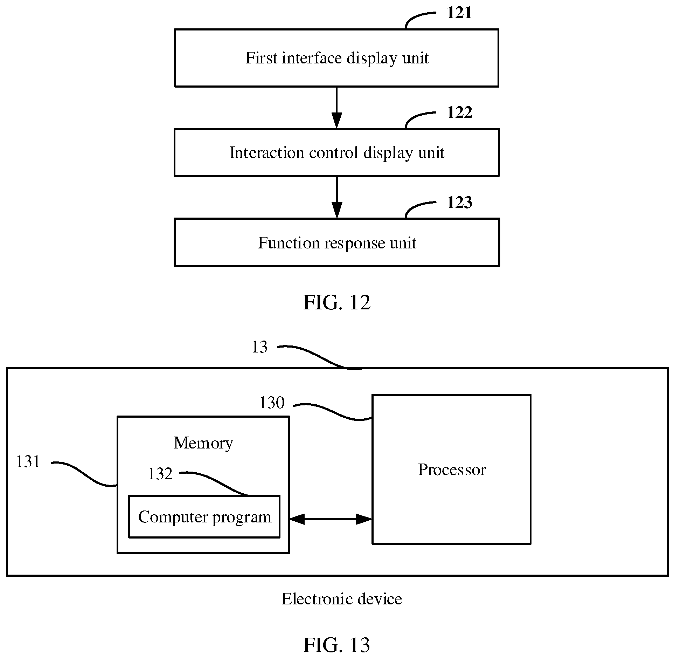

FIG. 12 is a block diagram of a structure of a display apparatus according to an embodiment of this application; and
FIG. 13 is a diagram of a structure of an electronic device according to an embodiment of this application.

### DESCRIPTION OF EMBODIMENTS

In the following description, for description instead of limitation, details such as a specific system structure and technology are provided, to thoroughly understand embodiments of this application. However, a person skilled in the art should understand that this application may also be implemented in other embodiments without these details. In other cases, detailed descriptions of a well-known system, apparatus, circuit, and method are omitted, so that this application is described without being obscured by unnecessary details.

It should be understood that, when used in this specification and the appended claims of this application, the term "include" indicates the presence of the described features, entireties, steps, operations, elements, and/or components, without excluding the presence or addition of one or more other features, entireties, steps, operations, elements, components, and/or sets thereof.

It should also be understood that the term "and/or" used in this specification and the appended claims of this application indicates any combination and all possible combinations of one or more associated listed items, and includes these combinations.

As used in this specification and the appended claims of this application, the term "if" may be interpreted as "when" or "once" or "in response to determining" or "in response to detecting" depending on the context. Similarly, the phrase "if it is determined" or "if [a described condition or event] is detected" may be interpreted, depending on the context, to mean "once determined" or "in response to determining" or "once [a described condition or event] is detected" or "in response to detecting [a described condition or event]".

In addition, in the description of this specification and the appended claims of this application, the terms "first", "second", "third", and the like are merely used for distinguishing between descriptions, but cannot be understood as indicating or implying relative importance.

Reference to "an embodiment" or "some embodiments" described in this specification of this application means that one or more embodiments of this application include a specific characteristic, structure, or feature described with reference to the embodiments. Therefore, statements such as "in an embodiment", "in some embodiments", "in other embodiments", and "in some other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

With continuous development of the electronization process, an increasing number of services can be implemented through applications. Different types of applications may be installed in an electronic device, to meet use requirements of a user in different scenarios. Generally, each application can provide one type of service for the user. For example, a chat application may implement an online chat function, and a map application may implement functions such as location search and navigation. Therefore, if the user needs to use services with a plurality of different functions, the user usually needs to switch between different applications.

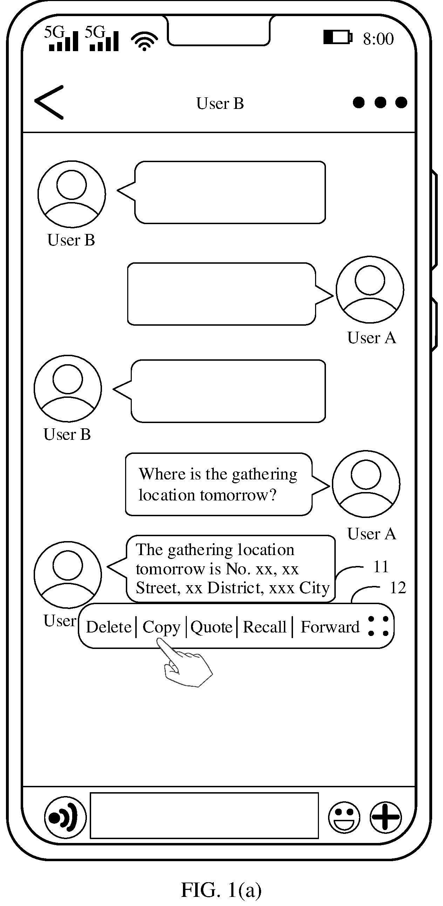

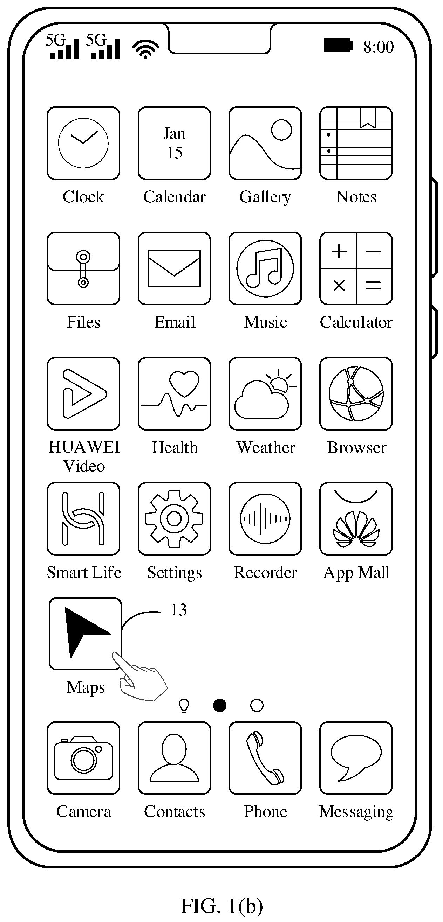

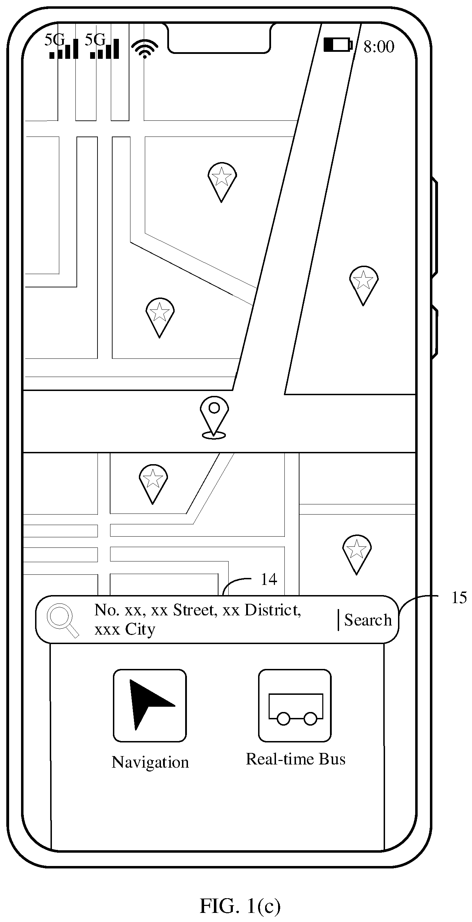

For example, FIG. 1(a), FIG. 1(b), and FIG. 1(c) are diagrams of a use operation of a user in an existing scenario. As shown FIG. 1(a), a chat application is running in a foreground of a smartphone, and a user A and a user B chat online to discuss a gathering location tomorrow, where the gathering location is specifically "No. xx, xx Street, xx District, xxx City", that is, a chat record 11. Because the user A does not know a specific location of the gathering location, the user A needs to query the location on a map, and address search needs to be implemented by using the following steps.
1. Pop up a corresponding operation menu, such as a menu 12 in FIG. 1(a), FIG. 1(b), and FIG. 1(c), by touching and holding the chat record 11, and tap a copy key in the menu 12 to copy text content corresponding to the gathering location.
2. Exit the chat application, and switch to a home screen, as shown in FIG. 1(b). Then, search the home screen for an icon control corresponding to the map application, that is, an icon control 13, and tap the icon control 13, to start the map application.
3. After the map application is started, a corresponding map application interface is displayed, as shown in FIG. 1(c). The user may paste the copied text content in an input area 14 of the map application interface, and finally tap a search control 15, to complete location search.

It can be learned that when the user uses different services, a corresponding interaction path thereof is long. This increases operation difficulty of the user and reduces operation efficiency of the user. This is because an interface generated by an application generally can implement only a single service. For example, an interface of the chat application can implement only an online chat service, and an interface of the map application can implement only map-related services such as location search and navigation. Controls configured in each interface are also configured based on different function requirements of the service, that is, interaction controls in each interface have single functions, and a quantity of controls is fixed. Associated interaction controls cannot be configured based on an object operated by a user, and an operation intention of a user operation behavior cannot be understood. Consequently, in a scenario with a plurality of types of requirements, operation steps of the user are increased, and user experience is affected.

### Embodiment 1:

To resolve a problem existing in an interaction technology, an embodiment of this application provides an interaction control display method, to generate and display an associated interaction control based on a display object operated by a user, so that the associated interaction control can be configured in a personalized manner based on an operation intention of the user, so as to improve interaction efficiency and reduce an interaction path. In this embodiment, the interaction control display method may be applied to an electronic device. The electronic device may be a device that can interact with a user, such as a computer, a server, a notebook computer, or a smartphone. The electronic device may be configured with an interaction module and a display module. The interaction module may be a touchscreen, a mouse, a keyboard, a stylus, or the like, to obtain an interaction operation of the user by using the interaction module, and respond to the interaction operation initiated by the user. The display module may be a display, a projector, or the like. An interface including an interaction control is displayed by using the display module, and the user may initiate the interaction operation on the displayed interface. The interaction module and the display module may be built in the electronic device, or may be external devices. A connection relationship between the interaction module and the electronic device and a connection relationship between the display module and the electronic device are not limited herein.

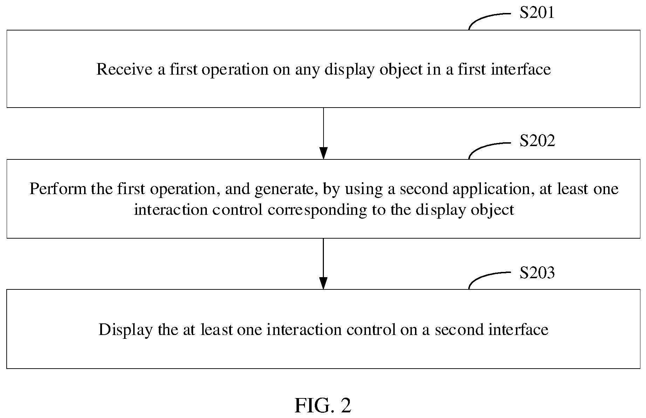

Specifically, FIG. 2 is a specific implementation flowchart of an interaction control display method according to an embodiment of this application. As shown in FIG. 2, the interaction control display method according to an embodiment of this application includes the following steps.

S201: Receive a first operation on any display object in a first interface, where the first interface is an interface corresponding to a first application running in a foreground.

The first operation may be a touch operation, or may be an air operation or a voice operation. This is not limited in this application.

In this embodiment, a plurality of different applications may be installed on the electronic device, such as a chat application, an electronic document application, and a map application. The user may select an icon of an application that needs to be used in a manner of tapping or double-tapping. When receiving a start operation initiated by the user, the electronic device may run the application (namely, a first application) selected by the user, and display an operation interface corresponding to the application, that is, the foregoing first interface.

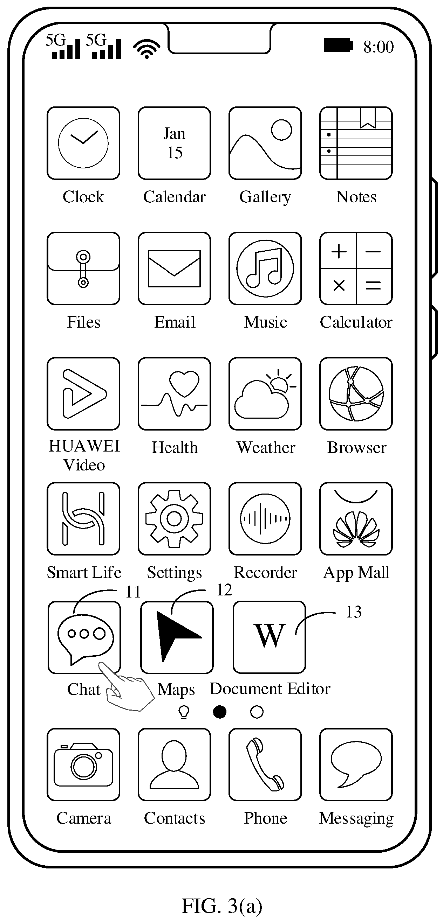

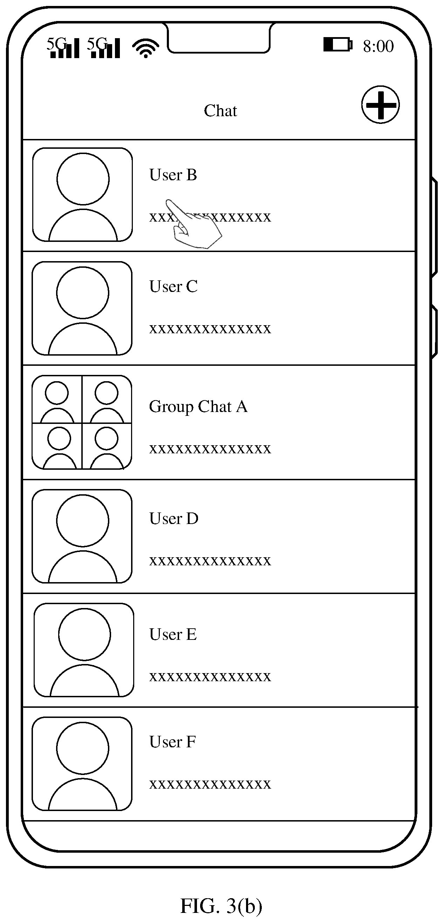

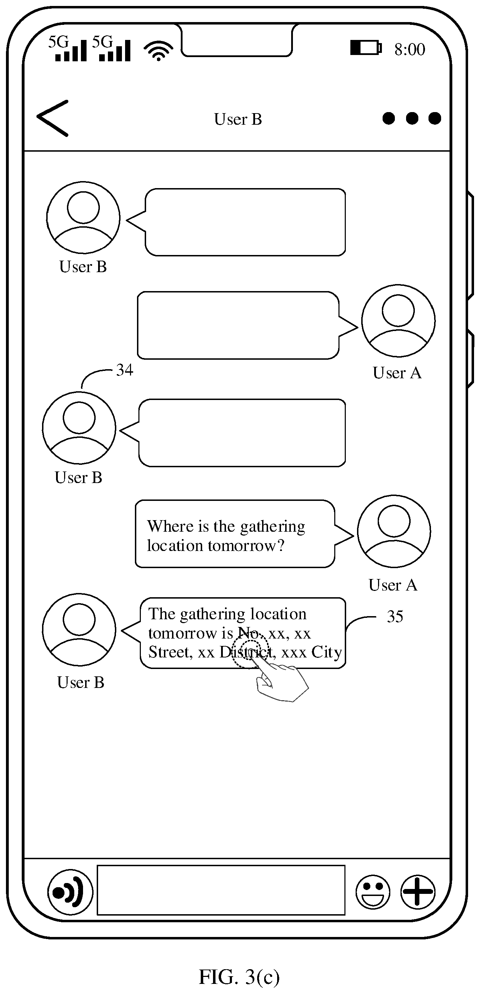

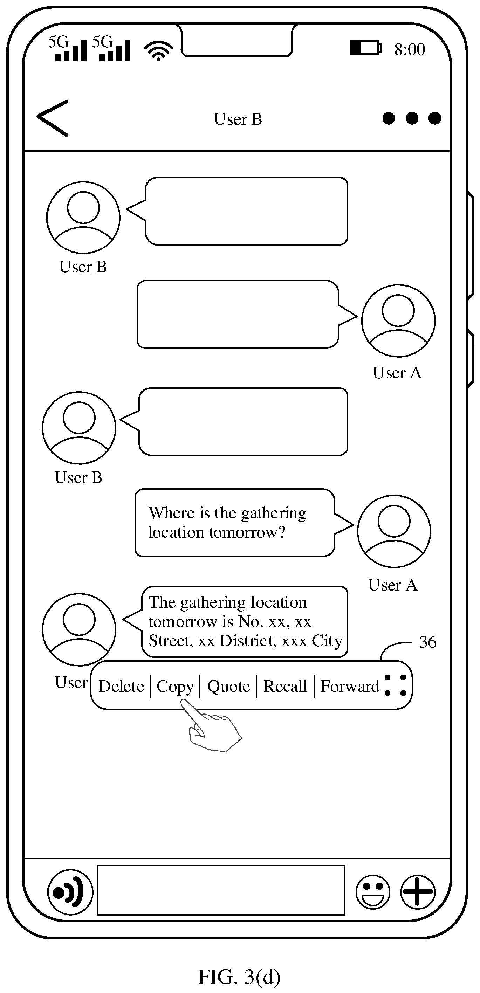

For example, FIG. 3(a), FIG. 3(b), FIG. 3(c), and FIG. 3(d) are diagrams of the first interface according to an embodiment of this application. As shown in FIG. 3(a), the electronic device is a smartphone, and a home screen of the smartphone includes icon controls of a plurality of installed applications, such as a control 31 of a chat application, a control 32 of a map application, and a control 33 of a document editing program. When detecting that the user taps the control 31, the electronic device identifies that the user needs to start the chat application, runs the chat application in a foreground, and generates a corresponding chat interface. As shown in FIG. 3(b), the user may select, from a plurality of chat objects, a target user for online chat, for example, select a user B as a chat object, and enter a corresponding chat interface, as shown in FIG. 3(c).

In this embodiment, the first interface includes a plurality of types of display objects, where the display objects include a text object of a text type, an image object of an image type, a control object used to initiate a specified operation, and the like. Specifically, a type of the display object included in the first interface may be set based on an actual situation. This is not limited herein.

In this embodiment, the first screen includes a plurality of display objects, and the user may perform an operation on any display object in the first screen, that is, initiate the first operation. For example, FIG. 3(a), FIG. 3(b), FIG. 3(c), and FIG. 3(d) are still used as an example for description. As shown in FIG. 3(c), the chat interface includes an avatar control 34 of a chat object, and the user may view user information of the user by tapping the avatar control 34. The chat interface includes a chat record 35 corresponding to chat content, and the user may touch and hold the chat record 35 to invoke a corresponding operable menu 36, as shown in FIG. 3(d). The operable menu 36 includes forwarding, copying, quoting, deletion, and the like for text information. The user may perform a corresponding operation on the text information in the chat record 35 by tapping a corresponding control in a menu bar.

In some possible implementations, the user may initiate the first operation in a manner associated with the interaction module based on the interaction module configured on the electronic device. For example, if the electronic device is configured with a touchscreen, the user may initiate the first operation in a touch manner. In this case, the first operation includes a plurality of operations such as tapping, selection through touching and holding, and dragging. If the electronic device is configured with a keyboard and a mouse, the user may initiate the first operation in a manner of controlling the keyboard and the mouse, for example, controlling a cursor on a screen to select a corresponding display object, may select a display object in a specified area on the screen by using the cursor, may perform text input by using the keyboard, or the like. Specifically, a corresponding manner may be selected based on an actual situation, to initiate the first operation.

S202: Perform the first operation, and generate, by using a second application, at least one interaction control corresponding to the display object.

In this embodiment, the electronic device may respond to the first operation initiated by the user on the first interface. For example, when the first operation is copying text content in the first interface, the electronic device may add the copied text content to a clipboard in respond to a copy operation initiated by the user. Subsequently, when receiving a pasting instruction of the user, the electronic device may copy the related text content stored in the clipboard to a specified area. When the first operation is a selection operation for a part of text content in an electronic document, the electronic device may highlight, by using a preset color in respond to the selection operation initiated by the user, the text content selected by the user. A specific manner of performing the first operation may be determined based on an operation type of the first operation, and is not limited herein.

Different from the conventional technology, in this embodiment, the electronic device not only performs the first operation initiated by the user on the first interface, but can also determine, by using the second application, the display object corresponding to the first operation when the user initiates the first operation, and generate the at least one interaction control associated with the display object, so that an operation intention of the user can be understood, and the user can directly perform a corresponding interaction operation by using the interaction control, to reduce a length of an interaction path and improve human-computer interaction operation efficiency.

The second application in this application may be an intelligent assistant program. The intelligent assistant program may sense various types of operations initiated by the user on an interface of another application (for example, the first interface of the first application), and understand the operation intention of the user, that is, understand an intention of the display object specified in the operation, to generate the interaction control associated with the display object, so that an objective of performing personalized service recommendation for the user is achieved, and operation efficiency of the user is improved. For example, the intelligent assistant application may be a voice assistant application, for example, Celia, Xiao Ai, or Siri.

In a possible implementation, a big data model is configured in the second application, and the big data model may be obtained by training a model by using a large quantity of training samples. The training sample may be an operation logic chain obtained through collection in a process of using the device, and the operation logic chain includes a start operation and an end operation. The start operation is a historical operation performed by the user on an existing display object on any operation interface, and the end operation may be an operation of applying a display object on a first operation interface to another operation interface.

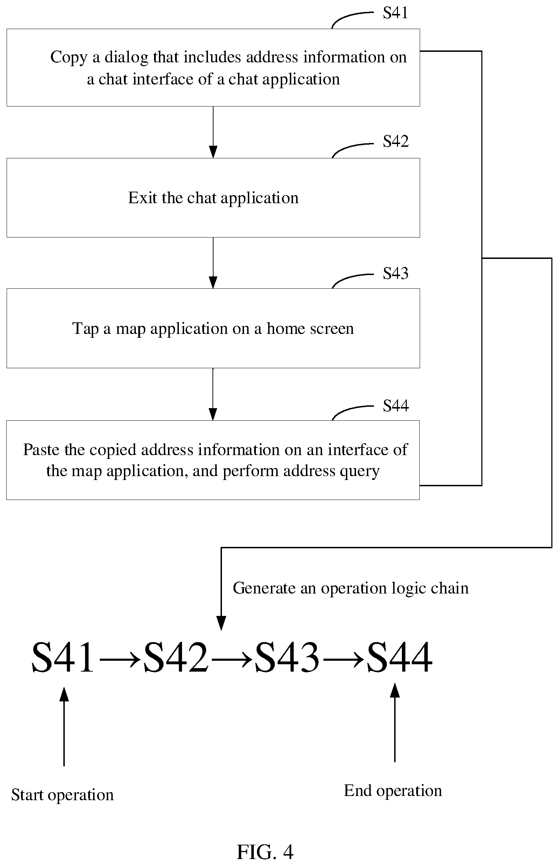

For example, FIG. 4 is a diagram of collecting the operation logic chain according to an embodiment of this application. As shown in FIG. 4, that the user copies an address in a dialog box to a map application for address search specifically includes the following a plurality of steps.

S41: Copy the dialog box that includes address information in a chat interface of a chat application.

S42: Exit the chat application.

S43: Tap the map application on a home screen.

S44. Paste the copied address information on an interface of the map application, and perform address query.

Therefore, the electronic device may generate an operation logic chain based on operations of the foregoing plurality of steps. The operation logic chain may be represented as: <S41→S42→S43→S44>. Because S41 is an operation initiated in the interface of the chat application, S42 is an operation initiated in the map application, and the two operations correspond to different application interfaces, the training sample may be generated based on S41 and S44 in the operation logic chain, to perform model training on the foregoing big data model. Subsequently, when it is detected that the user initiates an operation that matches S41 (for example, copying another dialog box that includes address information in a chat interface of another chat application), an interaction control that matches S44 may be generated, so that after the user performs and completes S41, an operation of S44 can be directly performed without performing an intermediate operation. This achieves an objective of quickly performing a specified interaction operation, simplifies an interaction path, and improves operation efficiency of the user.

For example, generating the interaction control corresponding to the display object may specifically include the following manners.

Manner 1: Generate an associated interaction control based on a content feature of the display object.

In this embodiment, the electronic device may generate, based on the content feature corresponding to the display object, the at least one interaction control corresponding to the content feature. The content feature may be used to determine an operation intention of the user, that is, an objective of initiating the first operation on the display object and operations that may need to be performed subsequently, so that interaction controls corresponding to the operations that may be performed by the user can be generated, and operation steps required by the user for performing the subsequent operations can be reduced.

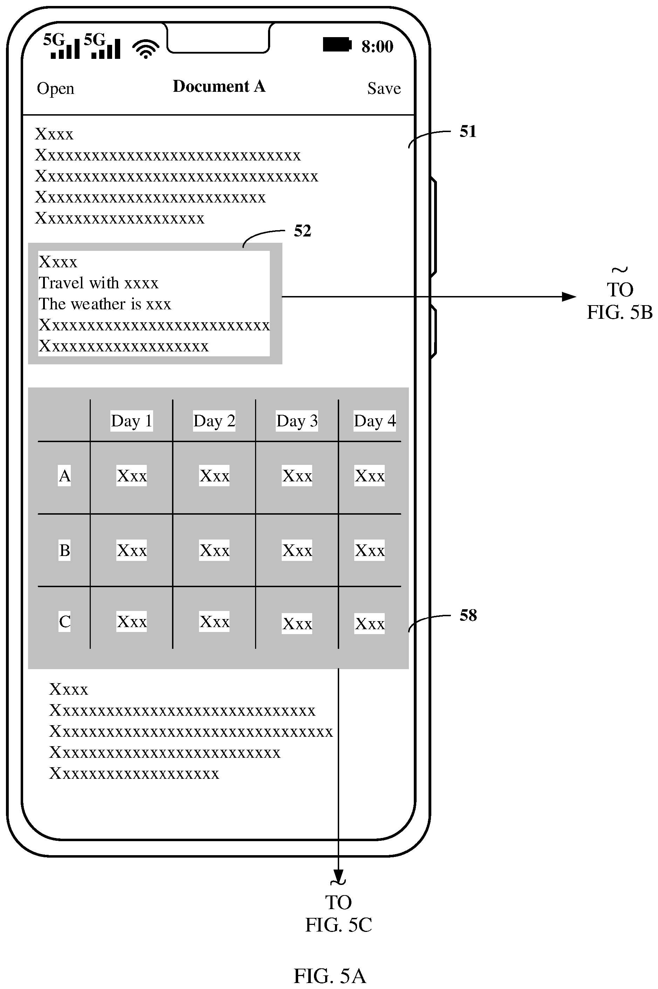

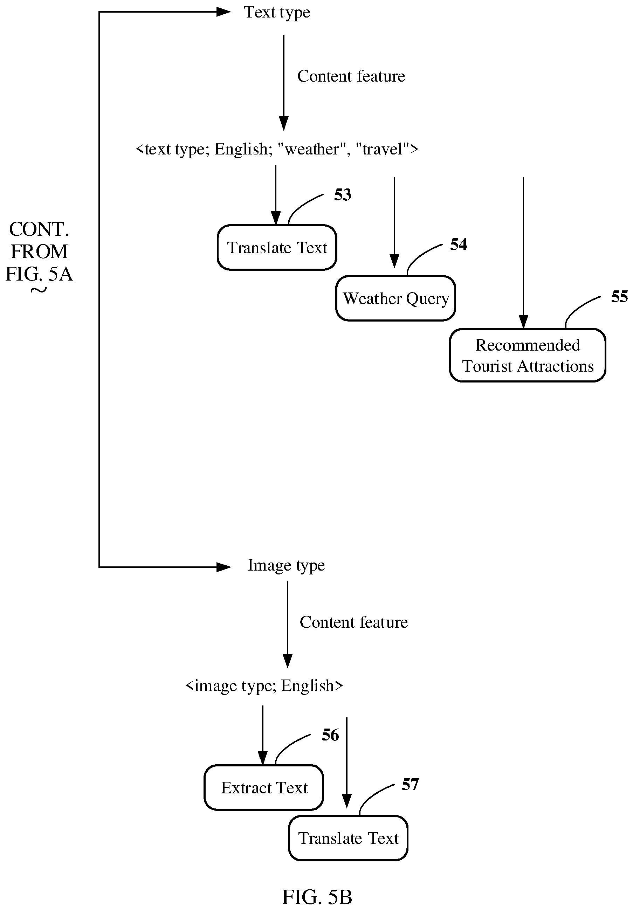

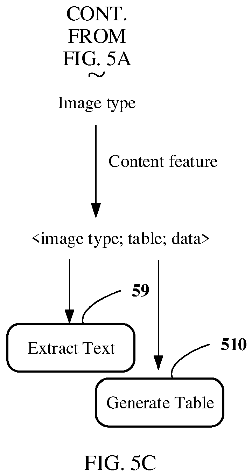

For example, FIG. 5A, FIG. 5B, and FIG. 5C are a diagram of generating the interaction control based on display content according to an embodiment of this application. As shown in FIG. 5A, FIG. 5B, and FIG. 5C, the electronic device is a smartphone, and an application that is currently running in a foreground of the smartphone is a document reading application. The user may generate a corresponding reading interface by using the document reading application. The reading interface displays an electronic document opened by the user, that is, an interface 51. The interface 51 includes a text paragraph 52 of a text type, and further includes a table image 53 stored in an image format.

In a scenario, the user selects the text paragraph 52 in the interface 51, and content recognition is performed on the text paragraph 52 to obtain a content feature corresponding to the text paragraph 52. The content feature may include feature information of the display content in a plurality of dimensions. For example, the content feature may be used to determine a data type corresponding to the text paragraph 52, and determine, based on the data type, at least one dimension feature corresponding to the data type. For example, for the text type, a language type used by the text paragraph 52 and content semantics corresponding to the text paragraph 52 may be determined.

The text paragraph 52 is used as an example. The content feature may be represented as: <text type; English; "weather", "travel">, where the "text type" is used to determine the data type corresponding to the display object, the "English" is used to determine the language type used by the display object, and the "weather" and the "travel" are used to indicate the content semantics corresponding to the text paragraph 52. The two dimensions of the language type and the content semantics are determined based on the data type of the text type. If the data type is another data type, subsequent dimension features may be different.

In this embodiment, the electronic device may obtain the foregoing content feature by using the second application, and determine, based on the content feature, the interaction control corresponding to the content feature. An example in which the content feature <text type; English; "weather", "travel"> is obtained in the scenario is still used for description. The user initiates the first operation to select the foregoing text paragraph 52. Because the text paragraph 52 is in English, which is inconsistent with a default language set by the electronic device, the electronic device may predict, by using the second application, that the user may need to perform text translation on the text paragraph 52. Therefore, an interaction control used to directly translate the text content may be generated, to obtain a control 53 of text translation. The electronic device may further predict, based on the content semantics such as "weather" and "travel", that the user needs to query weather or query travel a destination, to obtain a corresponding control 54 of weather query and a control 55 of tourist attractions recommendation.

In some possible implementation scenarios, if the text paragraph 52 is not stored in the electronic document in an editable text format, for example, an electronic document is stored in an image form, that is, both the text content and content in another format are encapsulated in an image file, and the user selects the text paragraph 52, that is, an area in the image file, a data type of the foregoing obtained content feature is an "image type". In addition, because the image area is data in a text form but not data in a graphic form, it may be predicted that the user may need to extract text data in the image area. Therefore, a control 56 of text extraction is obtained. Moreover, because a language type of the text data is also an English type, a control 57 of text translation may also be generated. For the text paragraphs 52 with same content but different data formats, different interaction controls may be generated. A specific quantity of generated interaction controls and interaction content may be determined based on the content feature.

In a scenario, the user selects a table image 58 in the interface 51, and content recognition is performed on the table image 58 to obtain a content feature corresponding to the table image 58. The content feature may be represented as <image type; table; data>, where the "image type" is used to determine a data type corresponding to the display object (that is, a table image 53), and the "table" and the "data" are used to determine the content feature corresponding to the table image 53. The electronic device may identify an operation intention based on the content feature corresponding to the table image 58, and may predict, by using the big data model in the second application, that operations that may be subsequently performed by the user are: table generation and text extraction. The "text extraction" is determined based on a dimension feature "image type" in the content feature, and the "table generation" is determined based on a dimension feature "table" in the content feature. Based on the foregoing two operations, a control 59 of "Extract Text" and a control 510 of "Generate Table" may be obtained. In some implementations, each interaction control may be determined based on two or more dimension features in the content feature. Specifically, a dimension feature required for generating the interaction module may be determined based on an actual situation.

In some implementations, the electronic device may import the content feature into the big data model corresponding to the second application, calculate, by using the big data model, interaction confidence corresponding to each candidate control, and then select a candidate control whose interaction confidence is greater than a preset confidence threshold as the foregoing interaction control.

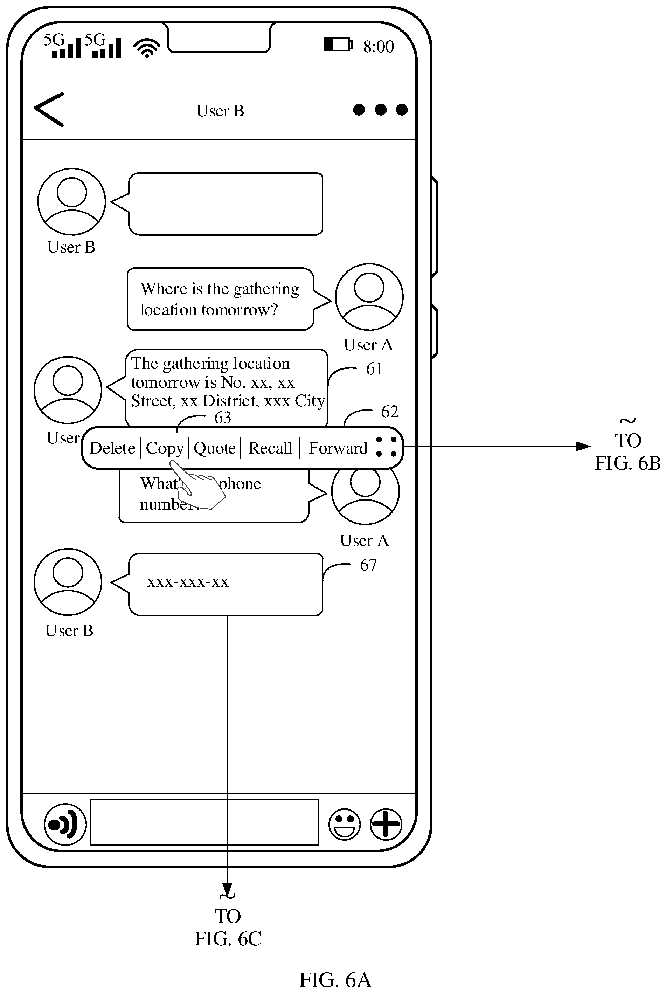

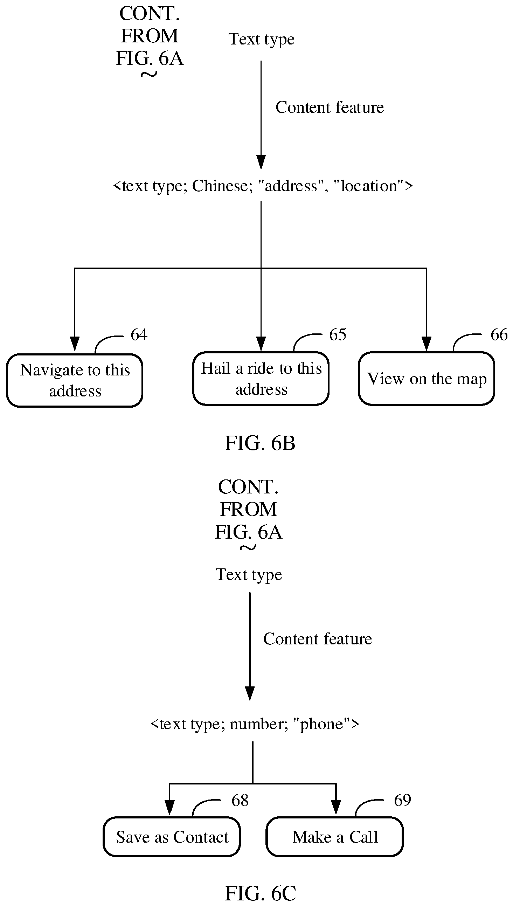

For example, FIG. 6A, FIG. 6B, and FIG. 6C are a diagram of generating the interaction control based on the display content according to another embodiment of this application. As shown in FIG. 6A, FIG. 6B, and FIG. 6C, the electronic device is a smartphone, and an application that is currently running in a foreground of the smartphone is a chat program. The user may perform online communication with another user on a chat interface corresponding to the chat application. The chat interface includes a plurality of chat records, for example, a chat record 61. The chat record 61 includes address information, which is specifically "The gathering location tomorrow is No. xx, xx Street, xx District, xxx City". The user taps and holds the chat record to invoke a corresponding menu bar 62, and taps a copy control 63 in the menu bar 62 to initiate a copy operation on the chat record 61. Content feature recognition is performed on the chat record 61 by using the second application, to obtain a corresponding content feature. The content feature may be represented as <text type; Chinese; "address", "location">. The "text type" is used to determine the data type of the display object, the "Chinese" is used to determine the language type used by the display object, and the "address" and the "location" indicate content semantics corresponding to the chat record 61. User operation prediction is performed on the foregoing content feature, so that it may be predicted that the user may need to perform an address-related interaction operation subsequently, for example, navigating to the address, hailing a ride to the address, and viewing the address on a map. Therefore, interaction controls corresponding to the foregoing three interaction operations may be generated, namely, an interaction control 64 of "Navigate to this address", an interaction control 65 of "Hail a ride to this address", and an interaction control 66 of "View on the map".

In a scenario, the chat interface further includes a chat record 67. The chat record 67 specifically records a phone number, and the phone number is "xxx-xxx-xx". Similarly, the user may invoke a corresponding menu bar through touching and holding, and tap a copy control in the menu bar. Content feature recognition is performed on the chat record 67 by using the second application, to obtain a corresponding content feature. The content feature may be represented as <text type; number; "phone">. The electronic device may generate, by using the second application, an interaction control corresponding to the content feature, for example, an interaction control 68 of "Save as Contact" and an interaction control 69 of "Make a Call".

In some implementations, when determining the content feature, different algorithms are used for different data types. Based on this, the electronic device may generate, by using a feature recognition algorithm that matches the data type of the display object, the content feature corresponding to the display object. For example, if the data type of the display object is the text type, the feature recognition algorithm may be a text semantic recognition algorithm, and a corresponding text semantic feature may be obtained by importing text data corresponding to the display object into the text semantic recognition algorithm. If object data of the display object is the image type, the feature recognition algorithm may be an image recognition algorithm, and a corresponding image semantic feature may be obtained by importing image data corresponding to the display object into the image recognition algorithm. For another data type, a corresponding feature recognition algorithm may be used to perform feature recognition, to obtain a corresponding content feature, so that content feature recognition can be performed by using a corresponding algorithm based on the data type, to improve accuracy of content feature recognition.

Manner 2: Generate the associated interaction control based on the content feature of the displayed content and the operation type of the first operation.

In this embodiment, to further improve accuracy of generating the interaction control, in addition to obtaining the content feature corresponding to the display object, the electronic device may further obtain the operation type corresponding to the first operation initiated by the user, to generate, with reference to the foregoing two features, the interaction control that is logically associated with the first operation, so as to improve accuracy of the generated interaction control.

In this embodiment, generating the interaction control is specifically predicting a subsequent operation of the user. Therefore, even if an operation is performed on the same display object, if the user specifically performs different operations, prediction results of the subsequent operations are different, and then generated interaction controls are also different. The example in FIG. 6A, FIG. 6B, and FIG. 6C is still used as an example for description. If the first operation initiated by the user on the chat record 61 is a copy operation, an operation that may be subsequently initiated is a "paste" operation, that is, the address information is pasted into another application interface. Therefore, obtained interaction controls are three interaction controls related to the paste operation, such as interaction controls 64 to 66.

If the first operation initiated by the user on the chat record 61 is a translation operation, operations that may be subsequently initiated are opening translation software and selecting a corresponding translation language for text translation. Therefore, obtained interaction controls may be an interaction control of "Translate into English", an interaction control of "Translate into Japanese", and the like. A specific translation language may be determined based on a translation language commonly used by the user. This is not limited herein.

It may be determined, by using the foregoing example, that, in addition to the display object corresponding to the first operation, the generated interaction control is further related to the operation type of the first operation. Therefore, the electronic device may obtain the two parameters, and generate, based on the two parameters, the interaction control corresponding to the two parameters, to improve accuracy of generating the interaction control.

S203: Display the at least one interaction control in a second interface, where the second interface is an interface that is the same as or different from the first interface.

In this embodiment, after generating the interaction control related to the display object, the electronic device may display the interaction control on the second interface. The user may determine, based on an actual operation requirement, whether one of the interaction controls needs to be selected to quickly execute a corresponding interaction operation.

In this embodiment, based on different second interfaces that display the interaction control, there may be the following several cases.

Case 1: The first interface is the same as the second interface.

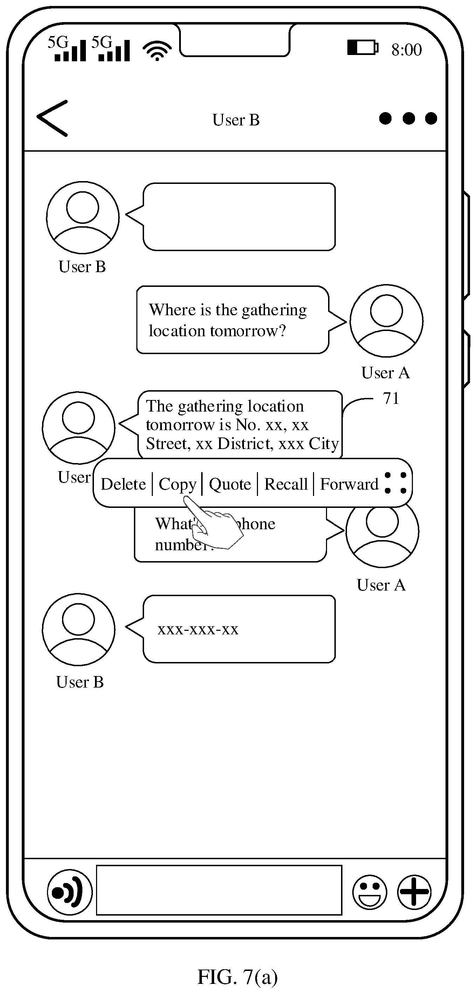

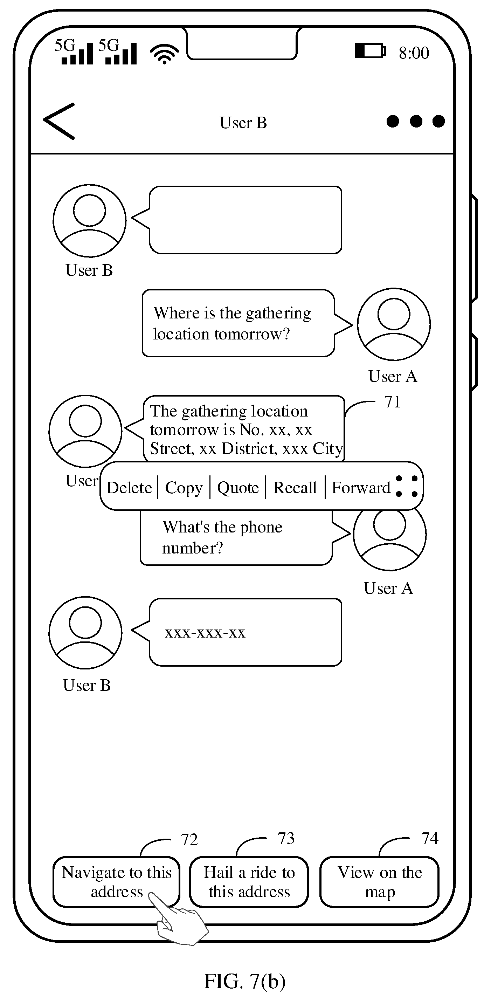

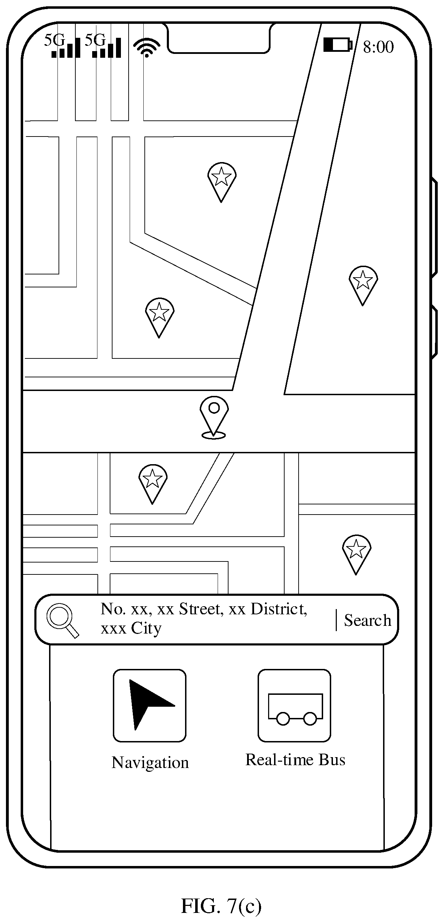

In this embodiment, the interaction control may be displayed on an interface in which the user initiates the first operation, that is, the first interface and the second interface are a same interface, so that convenience of an operation of the interaction control can be improved. For example, FIG. 7(a), FIG. 7(b), and FIG. 7(c) are diagrams of display of an interaction control according to an embodiment of this application. As shown in FIG. 7(a), the user initiates a copy operation on a chat record 71 (a chat record including address information) in the chat interface. In this scenario, the second application may be an application running in a background. Optionally, the second application is an intelligent assistant program, and the intelligent assistant program may sense, in the background, each operation initiated by the user in the chat interface. When the second application detects that the user initiates the copy operation on the chat record 71, an interaction control of "Navigate to this address", an interaction control of "Hailing a ride to this address", and an interaction control of "View on the map" may be generated, and the foregoing three controls are displayed on the chat interface, for example, an interaction control 72, an interaction control 73, and an interaction control 74 in FIG. 7(b).

Case 2: The first interface and the second interface are different interfaces of a same device.

In this embodiment, the interaction control may be displayed on another interface different from the first interface, that is, the second interface. The second interface is specifically an interface corresponding to the second application. In this embodiment, both the first application and the second application are applications running in the foreground, and the two applications may be simultaneously displayed on a display of the electronic device in a split-screen display manner or a window display manner.

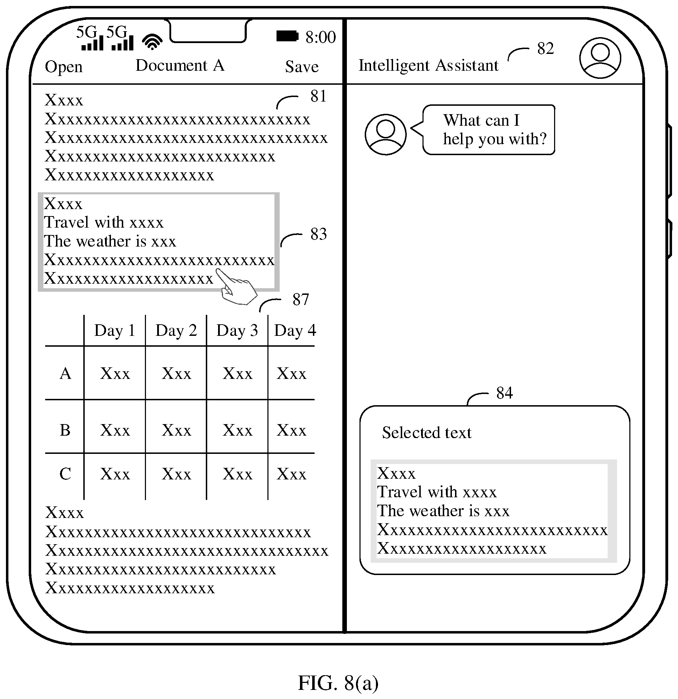

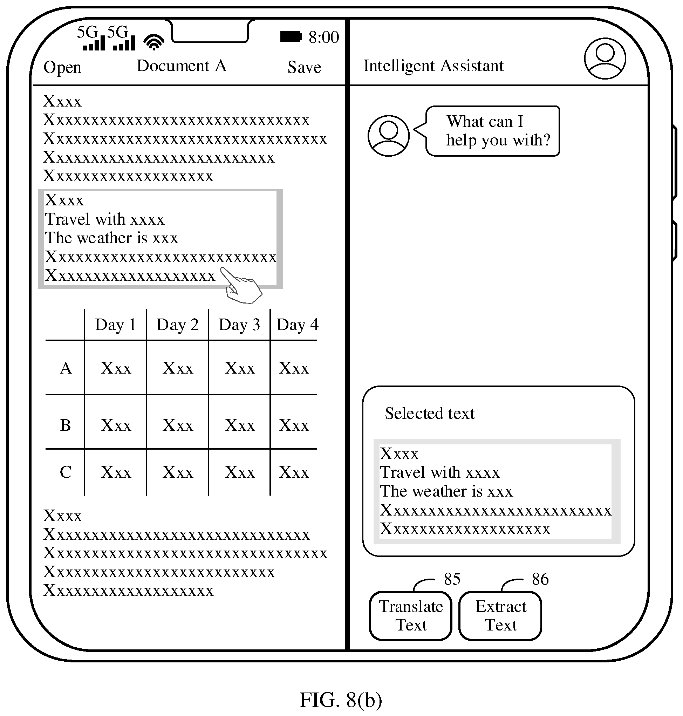

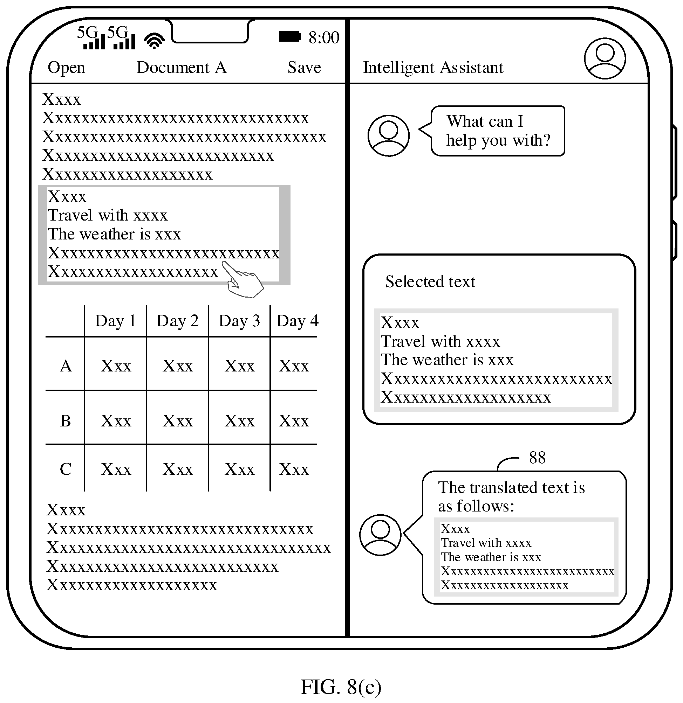

For example, FIG. 8(a), FIG. 8(b), and FIG. 8(c) are diagrams of display of an interaction control according to another embodiment of this application. As shown in FIG. 8(a), the electronic device has a split-screen display function, for example, a smartphone configured with a foldable screen. A left screen and a right screen of the foldable screen may be used to display interfaces of different applications, that is, an entire display area may be divided into an area 81 corresponding to the left screen and an area 82 corresponding to the right screen. The area 81 may display an interface corresponding to an application for reading an electronic document, and the electronic document opened by the user may be displayed by using the interface. The area 82 may display an interface corresponding to the intelligent assistant program, where the intelligent assistant program may be a voice assistant application, such as Celia, Xiao Ai, or Siri. The intelligent assistant program may be used to coordinate an operation of another interface. The user may perform an operation on the electronic document in the area 81, for example, select a text paragraph 83 in the area 81, where the display is a touchscreen, and the user may initiate a selection operation on the text paragraph 83 by touching and holding an area corresponding to the text paragraph 83. The second application may sense, in real time, an operation initiated by the user in the area 81, and synchronously display, in the area 82, the operation currently initiated by the user, for example, display a corresponding prompt box 84 when the text paragraph 83 selected by the user is displayed. In this case, the second application may generate a corresponding interaction control based on a selection operation initiated by the user on the text paragraph 83, to obtain an interaction control 85 of "Translate Text" and an interaction control 86 of "Extract Text" in FIG. 8(b).

In some scenarios, if the user selects an image area 87 that is in the area 81 and that includes a data table, the second application may also sense an image selection operation of the user in real time, and display, in the area 82, the image area 87 currently selected by the user, to obtain a corresponding prompt box. In this case, the second application may generate a corresponding interaction control based on a selection operation performed by the user on the image area 87, for example, obtain an interaction control of "Generate Table" and an interaction control of "Extract Text".

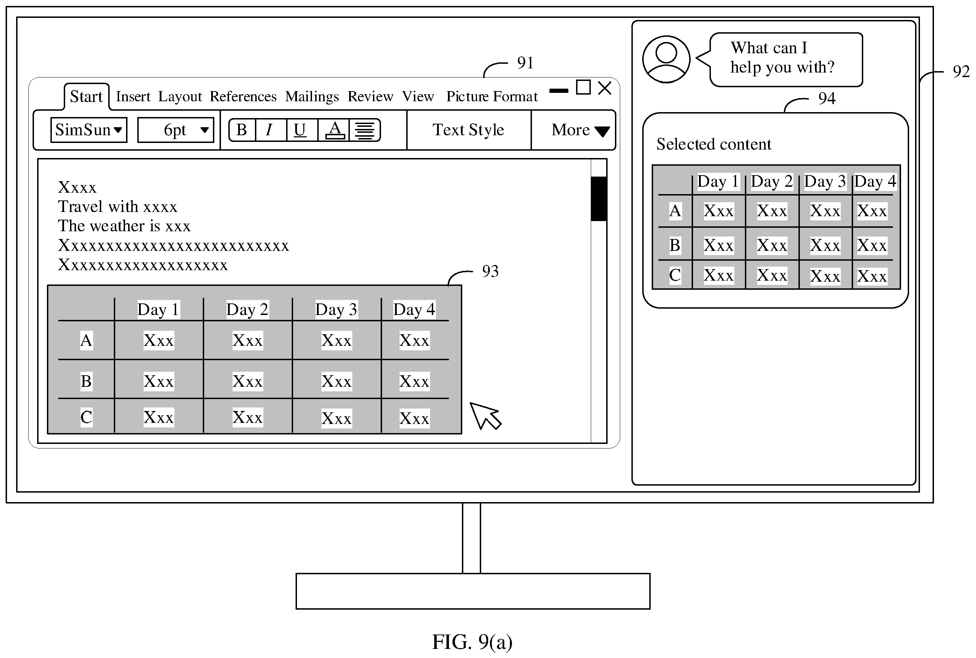

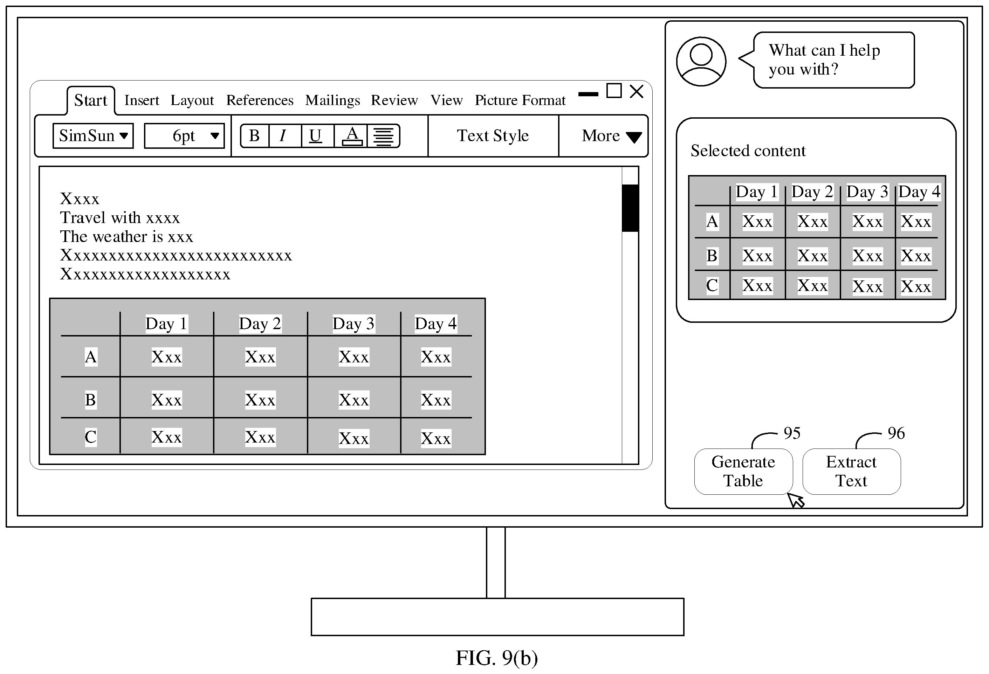

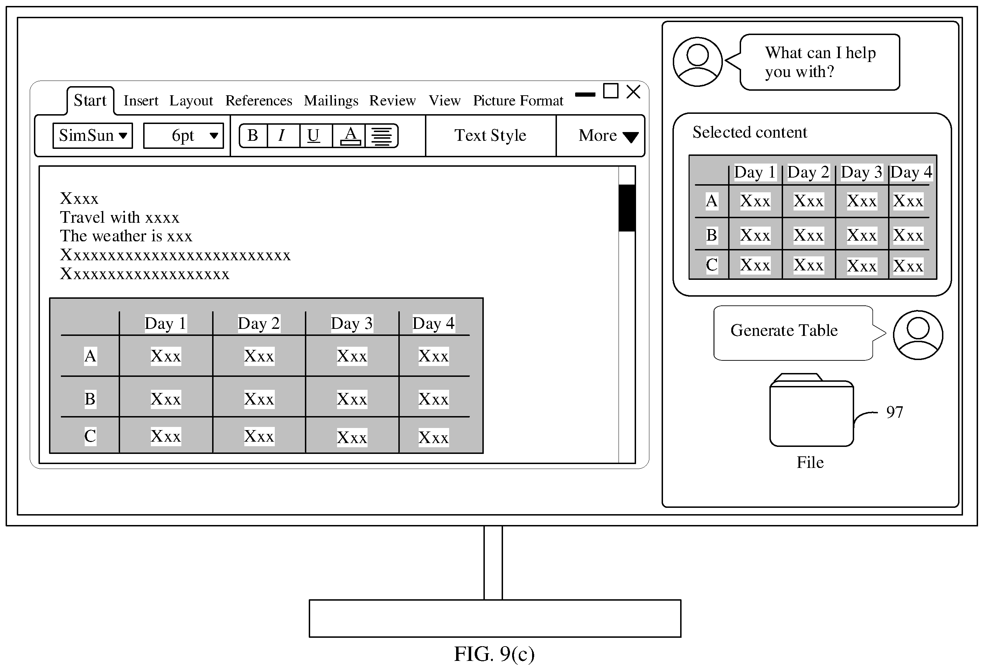

For example, FIG. 9(a), FIG. 9(b), and FIG. 9(c) is a diagram of display of an interaction control according to still another embodiment of this application. As shown in FIG. 9(a), the electronic device is a computer, two applications are run on the computer, and different applications may display corresponding interfaces through different windows. For example, an interface corresponding to an application for reading an electronic document is displayed through a window 91, and an interface corresponding to the intelligent assistant program is displayed through a window 92. Similarly, the intelligent assistant program may be used to assist the user in performing an operation in another window. Same as the embodiment in FIG. 8(a), FIG. 8(b), and FIG. 8(c), the user may select an image area 93 in the window 91 by using a cursor, and the window 92 may display, in real time, an operation initiated by the user in the window 91, for example, display a corresponding prompt box 94. The intelligent assistant program may generate a corresponding interaction control based on a selection operation initiated by the user on the image area 93, for example, an interaction control 95 of "Generate Table" and an interaction control 96 of "Extract Text" shown in FIG. 9(b).

Case 3: The first interface and the second interface are different interfaces in different devices.

In this embodiment, the electronic device may run collaboratively with another electronic device. For example, FIG. 10(a)-1, FIG. 10(a)-2, FIG. 10(b)-1, and FIG. 10(b)-2 are diagrams of display of an interaction control according to yet another embodiment of this application. As shown in FIG. 10(a)-1 and FIG. 10(a)-2, a smartphone 101 and a computer 102 are in a collaborative running state, and a data link is established between the two devices. A chat application is running in a foreground of the smartphone 101, and the user may copy a chat record 103 in a chat interface of the chat application. The intelligent assistant program is run on the computer 102, and the intelligent assistant program may obtain an operation of the user on the smartphone 101 by using the foregoing established data link. For example, when the user copies the chat record 103 on the smartphone 101, a corresponding copy operation may be displayed on the computer 102, and a corresponding prompt box 104 is obtained. The prompt box 104 may display: "The gathering location tomorrow is No. xx, xx Street, xx District, xxx City" has been copied to the clipboard. The intelligent assistant program run on the computer 102 may generate a corresponding interaction control based on the copy operation performed by the user on the chat record 103, to obtain an interaction control 105 of "Navigate to this address", an interaction control 106 of "Hail a ride to this address", and an interaction control 107 of "View on the map" in FIG. 10(b)-1 and FIG. 10(b)-2.

Further, as another embodiment of this application, after S203, the method further includes: displaying, in response to the second operation on the interaction control, an interaction result generated based on the display object.

In this embodiment, interaction controls for quick operations are displayed in the second interface. In this case, if the user needs to perform an interaction operation corresponding to an interaction control, the user may select one of the interaction controls, that is, initiate the second operation on any interaction control. The second operation may be a tap operation, a double-tap operation, or the like on the interaction control. In some implementation scenarios, the second operation may also be a voice operation, for example, a voice operation on the interaction control 72 is initiated by speaking a control name on the interaction control, such as speaking "View on the map" in FIG. 7(a), FIG. 7(b), and FIG. 7(c). A specific operation required for selecting the interaction control may be determined based on an actual situation. This is not limited herein.

In this embodiment, after receiving the second operation of the user on the interaction control, the electronic device may execute a function corresponding to the interaction control selected by the user, for example, execute an interaction operation preset in the interaction control, and generate an interaction result corresponding to the interaction operation. FIG. 8(a), FIG. 8(b), and FIG. 8(c) are still used as an example for description. If the user taps the interaction control 85, it indicates that text translation needs to be performed on the text paragraph 83 to convert English into Chinese. Therefore, a corresponding translation result may be displayed on an interface of the intelligent assistant program. As shown in FIG. 8(c), the corresponding translation result (that is, the interaction result) may be displayed by using a prompt box 88.

In this embodiment, in response to the second operation of the user on the interaction control, the following two cases may be classified based on different interaction content.

Case 1: Display the interaction result on the second interface corresponding to the second application.

In this embodiment, after the selects one of the interaction controls on the second interface, an interaction result obtained based on the interaction control may be displayed on the second interface. As shown in FIG. 8(c), the translation result may be displayed on the interface of the intelligent assistant program, that is, the foregoing prompt box 88 is obtained.

For another example, FIG. 9(a), FIG. 9(b), and FIG. 9(c) are used as an example for description. If the user taps the interaction control 95 of "Generate Table" by using a cursor, the electronic device may generate a corresponding table file based on content of the image area 93, and display the corresponding table file, for example, a file 97 shown in FIG. 9(c). The user may store the file 97 in a specified storage area, or may tap the file 97 to open the generated table file, to view generated table content, and may perform a subsequent operation on the interaction result based on an actual situation. This is not limited herein.

In this embodiment of this application, the user may tap a corresponding interaction control to perform a corresponding interaction operation, so that interaction operation efficiency can be improved, and the user does not need to manually invoke another application interface to complete the corresponding interaction operation, so that an interaction path is shortened, and user experience is improved.

Case 2: Display the interaction result on a third interface corresponding to a third application.

In this embodiment, the interaction control is specifically configured to invoke another application (namely, the third application), and execute a corresponding interaction operation by using the another application, to generate a corresponding interaction result. The another application program is an application other than an application currently operated by the user and an application used to generate an interaction control. In this case, the electronic device may start the third application, and display, in a third application interaction interface, the interaction result obtained based on the interaction control.

FIG. 7(a), FIG. 7(b), and FIG. 7(c) are still used as an example for description. If the user taps the interaction control 72, a corresponding address needs to be searched for on the map. In addition, the application currently operated by the user is the chat application, and the intelligent assistant program used to generate the interaction control may not have a map function integrated. In this case, after detecting that the user taps the interaction control 72, the electronic device may generate an enable instruction for the map application, to start the map application installed in the electronic device, and input copied address information into the map application, to determine, by using the map application, a location corresponding to the address information, to obtain a map interface shown in FIG. 7(c).

In this embodiment, the electronic device may invoke different third applications based on different interaction operations. For example, if the user taps the interaction control 74 of "Hail a ride to this address", the started third application program is a ride-hailing application, that is, the started third application is determined based on the interaction control of the user.

In this embodiment of this application, the user may start the third application by using the interaction control generated by the second application, and display the interaction result on the third interface of the third application, so that an application related to an interaction operation is quickly started, and the user does not need to exit a current interface and then start a corresponding application. This improves operation efficiency of the user.

It can be learned from the foregoing that, in the interaction control display method provided in this embodiment of this application, when receiving the first operation initiated by the user on the display object in the first interface, the electronic device can perform the first operation on the display object and can also generate, by using the second application, the interaction control corresponding to the display object, and display the generated interaction control on a corresponding interface, to achieve an objective of automatically matching an associated interaction control based on the display object. Compared with an existing interaction technology, interaction controls in this embodiment of this application are not fixed, and an interaction control that matches a display object operated by a user may be generated based on the display object operated by the user, so that a personalized interaction control can be generated based on the operated display object. This improves interaction operation efficiency, and can also shorten an interaction path and reduce operation difficulty.

### Embodiment 2:

Corresponding to the interaction control display method in Embodiment 1, FIG. 11 is a block diagram of a structure of an interaction control display apparatus according to an embodiment of this application. For ease of description, only a part related to this embodiment of this application is shown.

As shown in FIG. 11, the interaction control display apparatus includes:
a first operation receiving unit 111, configured to receive a first operation on any display object in a first interface, where the first interface is an interface corresponding to a first application running in a foreground;
a control generation unit 112, configured to perform the first operation, and generate, by using a second application, at least one interaction control corresponding to the display object; and
a control display unit 113, configured to display the at least one interaction control in a second interface, where the second interface is an interface that is the same as or different from the first interface.

Optionally, the control generation unit 112 is specifically configured to generate, based on a content feature corresponding to the display object, the at least one interaction control corresponding to the content feature.

Optionally, the control generation unit 112 is specifically configured to generate the at least one interaction control based on an operation type of the first operation and the content feature.

Optionally, the control display unit 113 is specifically configured to generate, by using a feature recognition algorithm corresponding to a data type of the display object, the content feature corresponding to the display object.

Optionally, the second interface is an interface corresponding to the second application.

Optionally, the display apparatus further includes:
an interaction response unit, configured to display, in response to a second operation on the interaction control, an interaction result generated based on the display object.

Optionally, the interaction response unit includes: a third application starting unit, configured to start a third application in response to the second operation on the interaction control; and
a third interface display unit, configured to display the interaction result on a third interface corresponding to the third application.

Optionally, the interaction response unit is specifically configured to display the interaction result on the second interface in response to the second operation on the interaction control, where the second interface is the interface corresponding to the second application.

### Embodiment 3:

Corresponding to the interaction control display method in Embodiment 1, FIG. 12 is a block diagram of a structure of a display apparatus according to an embodiment of this application. For ease of description, only a part related to this embodiment of this application is shown.

As shown in FIG. 12, the display apparatus is used in an electronic device, the electronic device includes an intelligent assistant program, and the display apparatus includes:
a first interface display unit 121, configured to display a first interface of a first application, where a display object is displayed on the first interface, and the first application and the intelligent assistant program are different programs;
an interaction control display unit 122, configured to display, by the electronic device by using the intelligent assistant program in response to an operation of the user on the display object, at least one interaction control associated with the display object; and
a function response unit 123, configured to perform, in response to the operation of the user on the at least one interaction control, a function corresponding to the at least one interaction control.

Optionally, the interaction control display unit 122 is specifically configured to generate, based on a content feature corresponding to the display object, the at least one interaction control corresponding to the content feature.

Optionally, the interaction control display unit 122 is specifically configured to generate the at least one interaction control based on an operation type of a first operation and the content feature.

Optionally, the interaction control display unit 122 is specifically configured to generate, by using a feature recognition algorithm corresponding to a data type of the display object, the content feature corresponding to the display object.

Optionally, the function response unit 123 includes:
a third application starting unit, configured to start a third application in response to a second operation on the interaction control; and
a third interface display unit, configured to display an interaction result on a third interface corresponding to the third application.

Optionally, the function response unit 123 is specifically configured to display the interaction result on the second interface in response to the second operation on the interaction control, where the second interface is an interface corresponding to the intelligent assistant program.

FIG. 13 is a diagram of a structure of an electronic device according to an embodiment of this application. As shown in FIG. 13, an electronic device 13 in this embodiment includes: at least one processor 130 (FIG. 13 shows only one processor, and a quantity of processors may match a quantity of chips actually included in the electronic device in this embodiment), a memory 131, and a program 132 that is stored in the memory 131 and that can be run on the at least one processor 130. When executing the program 132, the processor 130 implements the steps in the display method embodiment of any interaction control.

The electronic device 13 may be a VR display device, a smartphone, or the like. The electronic device may include, but is not limited to, the processor 130 and the memory 131. A person skilled in the art may understand that FIG. 13 is merely an example of the electronic device 13, and does not constitute a limitation on the electronic device 13. The electronic device 13 may include more or fewer components than those shown in the figure, or combine some components, or different components. For example, the electronic device 13 may further include an input/output electronic device, a network access electronic device, or the like.

The processor 130 may be a central processing unit (Central Processing Unit, CPU), or the processor 130 may be another general purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or transistor logic device, a discrete hardware component, or the like. The general-purpose processor may be a microprocessor, or the processor may be any conventional processor or the like.

In some embodiments, the memory 131 may be an internal storage unit of the electronic device 13, for example, a hard disk or an internal memory of the electronic device 13. In some other embodiments, the memory 131 may alternatively be an external storage electronic device of the electronic device 13, for example, a plug-in hard disk, a smart media card (Smart Media Card, SMC), a secure digital (Secure Digital, SD) card, or a flash card (Flash Card) that is disposed on the electronic device 13. Further, the memory 131 may include both an internal storage unit and an external storage electronic device of the electronic device 13. The memory 131 is configured to store an operating system, an application, a bootloader (BootLoader), data, another program, and the like, for example, program code of the program. The memory 131 may be further configured to temporarily store data that has been output or is to be output.

It should be noted that content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

A person skilled in the art may clearly understand that, for the purpose of convenient and brief description, division into the foregoing functional units and modules is merely used as an example for description. During actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program that is stored in the memory and that can be run on the at least one processor. When executing the computer program, the processor implements the steps in any one of the foregoing method embodiments.

An embodiment of this application further provides a readable storage medium. The readable storage medium stores a program. When the program is executed by a processor, the steps in the foregoing method embodiments can be implemented.

An embodiment of this application provides a program product. When the program product is run on an electronic device, the electronic device is enabled to implement the steps in the foregoing method embodiments when executing the program product.

When the integrated unit is implemented in the form of the software functional unit and sold or used as an independent product, the integrated unit may be stored in a computer-readable storage medium. Based on such an understanding, in this application, all or some of the procedures of the method in the foregoing embodiments may be implemented by a computer program instructing related hardware. The computer program may be stored in a computer-readable storage medium. When the computer program is executed by a processor, the steps of the method embodiments can be implemented. The computer program includes computer program code, and the computer program code may be in a source code form, an object code form, an executable file, some intermediate forms, or the like. The computer-readable medium may include at least any entity or apparatus that can carry the computer program code to a photographing apparatus/electronic device, a recording medium, a computer memory, a read-only memory (ROM, Read-Only Memory), a random access memory (RAM, Random Access Memory), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunication signal according to legislation and patent practices.

In the foregoing embodiments, descriptions of each embodiment have respective focuses. For a part that is not described in detail or recorded in an embodiment, refer to related descriptions in other embodiments.

The foregoing embodiments are merely intended to describe the technical solutions of this application, but are not intended to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1. An interaction control display method, comprising:
receiving a first operation on any display object in a first interface, wherein the first interface is an interface corresponding to a first application running in a foreground;
performing the first operation, and generating, by using a second application, at least one interaction control corresponding to the display object; and
displaying the at least one interaction control on a second interface, wherein the second interface is an interface that is the same as or different from the first interface.

2. The display method according to claim 1, wherein the second application is an intelligent assistant application.

3. The display method according to claim 1 or 2, wherein performing the first operation, and generating, by using the second application, the at least one interaction control corresponding to the display object comprise:
generating, based on a content feature corresponding to the display object, the at least one interaction control corresponding to the content feature.

4. The display method according to claim 3, wherein generating, based on the content feature corresponding to the display object, the at least one interaction control corresponding to the content feature comprises:
generating the at least one interaction control based on an operation type of the first operation and the content feature.

5. The display method according to claim 3, wherein generating, based on the content feature corresponding to the display object, the at least one interaction control corresponding to the content feature comprises:
generating, by using a feature recognition algorithm corresponding to a data type of the display object, the content feature corresponding to the display object.

6. The display method according to any one of claims 1 to 5, wherein the second interface is an interface corresponding to the second application.

7. The display method according to any one of claims 1 to 6, wherein after displaying the at least one interaction control on the second interface, the method further comprises:
displaying, in response to a second operation on the interaction control, an interaction result generated based on the display object.

8. The display method according to claim 7, wherein displaying, in response to the second operation on the interaction control, the interaction result generated based on the display object comprises:
starting a third application in response to the second operation on the interaction control; and
displaying the interaction result on a third interface corresponding to the third application.

9. The display method according to claim 7, wherein displaying, in response to the second operation on the interaction control, the interaction result generated based on the display object comprises:
displaying the interaction result on the second interface in response to the second operation on the interaction control, wherein the second interface is the interface corresponding to the second application.

10. A display method, applied to an electronic device, wherein the electronic device comprises an intelligent assistant program, and the method comprises:
displaying a first interface of a first application, wherein a display object is displayed on the first interface, and the first application and the intelligent assistant program are different programs;
displaying, by the electronic device by using the intelligent assistant program in response to an operation of a user on the display object, at least one interaction control associated with the display object; and
performing, in response to an operation of the user on the at least one interaction control, a function corresponding to the at least one interaction control.

11. An interaction control display apparatus, comprising:
a first operation receiving unit, configured to receive a first operation on any display object in a first interface, wherein the first interface is an interface corresponding to a first application running in a foreground;
a control generation unit, configured to: perform the first operation, and generate, by using a second application, at least one interaction control corresponding to the display object; and
a control display unit, configured to display the at least one interaction control on a second interface, wherein the second interface is an interface that is the same as or different from the first interface.

12. An electronic device, wherein the electronic device comprises a memory, a processor, and a computer program that is stored in the memory and that is capable of being run on the processor, and when the processor executes the computer program, the steps of the method according to any one of claims 1 to 10 are implemented.

13. A computer-readable storage medium, wherein the computer-readable storage medium stores a computer program, and when the computer program is executed by a processor, the steps of the method according to any one of claims 1 to 10 are implemented.
